# EUROPEAN PATENT APPLICATION

(11) **EP 2 477 104 A1**
(43) Date of publication of application: **18.07.2012**
(21) Application number: 11195416.0
(22) Date of filing: 22.12.2011
(51) Int. Cl.: G06F 3/048, H04M 1/67, H04M 1/725

(54) **Method for providing a shortcut to the most likely application on the lock screen of a portable electronic device**

(30) Priority: 13.01.2011 TW 100101309
(71) Applicant: HTC Corporation, Taoyuan County 330 (TW)
(72) Inventor: Wang, Hui-Wen, 330 Taoyuan City Taoyuan County (TW); Kao, Yih-Feng, 330 Taoyuan City Taoyuan County (TW)
(74) Representative: 2K Patentanwälte Blasberg Kewitz & Reichel

(57) **Abstract**

A portable electronic device, a control method and a computer program product of the same are provided for providing a shortcut on a lock screen of the portable electronic device. The control method includes the following steps. An application usage history of a number of applications of the portable electronic device is stored. At least one of a current time and a current location of the portable electronic device is obtained. A most-likely-used application is determined from the applications according to the application usage history and at least one of the current time and the current location. A shortcut icon of the most-likely-used application is displayed on the lock screen of the portable electronic device. The most-likely-used application is opened when the portable electronic device is unlocked from the lock screen via a shortcut icon.

## Description

This application claims the benefit of Taiwan application Serial No. 100101309, filed January 13, 2011, the disclosure of which is incorporated by reference herein in its entirety.

### BACKGROUND

### Technical Field

The disclosed embodiments relate in general to an electronic device, a control method and a computer program product, and more particularly to a portable electronic device, a control method and a computer program product of the same.

### Description of the Related Art

In recent years, research in the field of portable electronic device, such as touch phone, personal digital assistant (PDA) and mobile phone, has gained remarkable progress. Normally, the portable electronic device provides a variety of applications for users.

In general, in order for users to use the applications, the applications of the portable electronic device are normally arranged in a hierarchical manner and are illustrated in the form of a menu for users' observation and selection. However, when a user would like to activate an application, he or she is required to go through several hierarchies of menus before the desired application can be located.

For example, when the user would like to activate a browser to read news, the required procedures may include activating the program files, opening the browser folder, locating the browser application, clicking the browser application, and searching for news webpage. These above procedures are tedious and inconvenient to the user. Therefore, there is a need the industries to increase the convenience for using a portable electronic device.

### SUMMARY

The disclosure is directed to a portable electronic device, a control method and a computer program product of the same capable of increasing the convenience in the use of the portable electronic device, making the operation of the portable electronic device simpler and more efficient.

According to one embodiment, a portable electronic device, a control method and a computer program product of the same are provided for providing a shortcut on a lock screen of the portable electronic device. The control method includes the following steps. An application usage history indicative of execution histories of a number of applications installed on the portable electronic device is stored. At least one of a current time and a current location of the portable electronic device is obtained. From the applications, an application that is most possible to be requested for execution is selected according to the application usage history and at least one of the current time and the current location. A shortcut icon used to activate the selected application is displayed on the lock screen of the portable electronic device. The selected application is activated when the portable electronic device is unlocked from the lock screen via the shortcut icon.

According to another embodiment, a portable electronic device including a storage unit, a detection unit, and a control unit is provided. The storage unit is used for storing an application usage history indicative of execution histories of a number of applications installed on the portable electronic device. The detection unit is used for obtaining at least one of a current time and a current location of the portable electronic device. The control unit is used for selecting from the applications an application that is most possible to be requested for execution according to the application usage history and at least one of the current time and the current location. The control unit is further used for controlling the portable electronic device to display a shortcut icon used to activate the selected application on the lock screen. The control unit is further used for activating the selected application when the portable electronic device is unlocked from the lock screen via the shortcut icon.

According to another embodiment, a computer program product is provided. After a computing device executes a computer program, the computing device completes the abovementioned control method of the portable electronic device.

### BRIEF DESCRIPTION OF THE DRAWINGS

FIG. 1 shows a flowchart of a control method of according to an embodiment;

FIG. 2 shows a block diagram of an example of a portable electronic device according to an embodiment; and

FIG. 3 shows a schematic diagram of an example of the portable electronic device of FIG. 2 and a lock screen displayed thereby.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

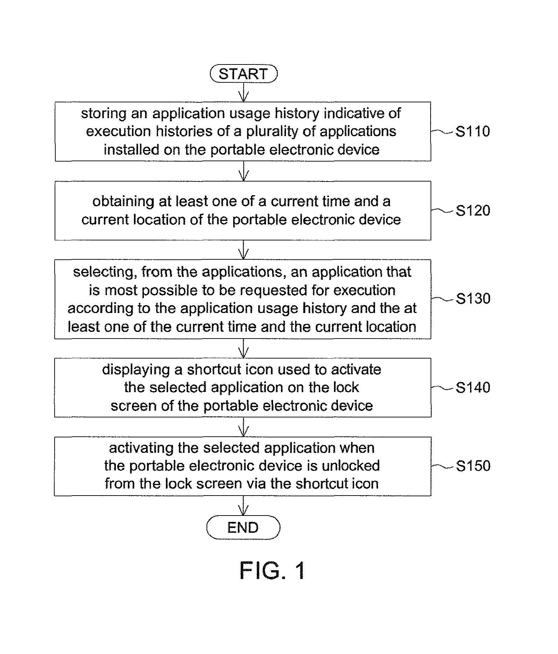

Referring FIG. 1, a flowchart of a control method of according to an embodiment is shown. The control method is for providing a shortcut on a lock screen of the portable electronic device. The method includes several steps. In step S110, an application usage history indicative of execution histories of a number of applications installed on the portable electronic device is stored. In step S120, at least one of a current time and a current location of the portable electronic device is obtained. In step S130, an application is selected from the applications according to the application usage history and at least one of the current time and the current location. The selected application is most possible to be requested for execution. In step S140, a shortcut icon used to activate the selected application is displayed on the lock screen of the portable electronic device. In step S150, the selected application is activated when the portable electronic device is unlocked from the lock screen via the shortcut icon.

According to the control method of portable electronic device disclosed in the above embodiment, the application that is most likely used by a user is identified by using the application usage history. This implies that the present embodiment is capable of constructing or predicting the user's behavior of operating the portable electronic device. Thus, a shortcut icon of such application can be provided at suitable time or location, so that the user can conveniently activate the desired application. In this way, convenience for using the portable electronic device is thus increased. The disclosure is further elaborated below with embodiments of a portable electronic device using the control method.

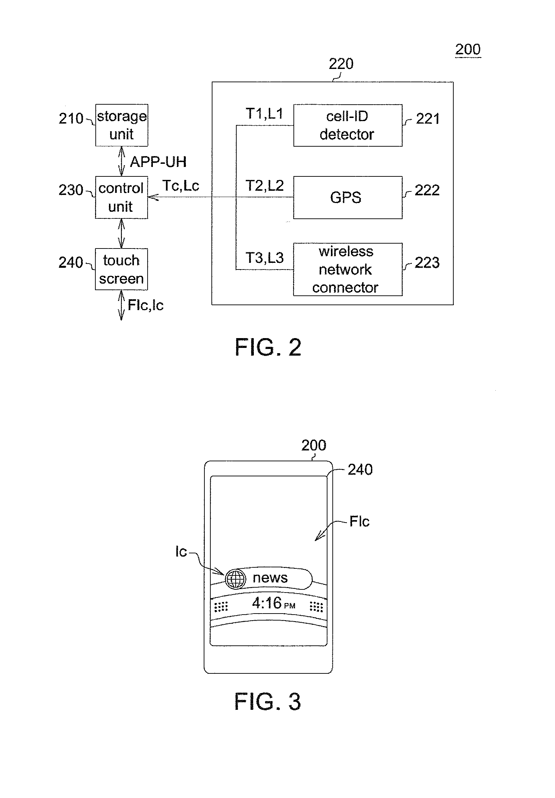

Referring FIG. 2, a block diagram of an example of a portable electronic device according to an embodiment is shown. The portable electronic device 200 includes a storage unit 210, a detection unit 220, a control unit 230, and a touch screen 240. The operation relationships among the units are disclosed below.

The storage unit 210 is used for storing an application usage history APP-UH indicative of execution histories of the applications. The application usage history APP-UH includes for example at least one of time information and location information of at least one predetermined event related to the applications. In other words, when a predetermined event related to a certain application occurs, at least one of the time information or the location information of the predetermined event will be stored to the storage unit 210 and recorded on the application usage history APP-UH. The predetermined event is for example an event that an application is activated, an event that an application is terminated, or an event that an application is in use. The time information or the location information can be provided by a detection unit 220, which can be realized by detection elements for detecting the current time Tc, and/or detection elements for detecting the current location Lc, and/or a combination thereof. For example, the detection unit 220 includes for example a cell identity (cell-ID) detector 221, a global positioning system (GPS) 222, and a wireless network connector 223. The cell-ID detector 221 provides cell-ID information L1 as the current location Lc of the portable electronic device 200. The global positioning system 222 provides GPS positioning information L2 as the current location Lc of the portable electronic device 200. The wireless network connector 223 provides address information L3 of a wireless access point as the current location Lc of the portable electronic device 200. The way of obtaining the current time Tc is exemplified below. For example, server time T1 (such as local time or time-zone time) provided by telecommunication services can be obtained by the cell-ID detector 221 from telecommunication circuit (not illustrated). For another example, satellite time T2 related to GPS positioning information L2 can be obtained by the global positioning system 222. For another example, Internet time T3 can be obtained by the wireless network connector 223. For another example, system time of the portable electronic device 200 can be obtained by an internal timer (not illustrated) or a clock. Thus, through suitable design of various predetermined events of applications, the control unit 230 can construct or predict user's behavior of operating the device by analyzing the application usage history APP-UH stored in the storage unit 210, and predict which application is most likely to be used by the user at a particular time or location.

In an embodiment, the predetermined event is exemplified as an event that an application is activated. For further illustration, when a user requests to activate an application, time and location at which the application is activated can be stored to the storage unit 210. For example, if the user requests to activate an Internet application to browse webpages on his/her commute path, then the information related to when and/or where the Internet application is activated can be stored to the storage unit 210 such that the portable electronic device 200 analyze the stored data and predict the user's behavior.

In another embodiment, the at least one predetermined event is exemplified as an event that an application is activated and another event that the application is terminated. The present embodiment is similar to the above embodiment in that when the user requests to activate an application the information related to when and/or where the application is activated is stored to the storage unit 210, but is different from the above embodiment in that when the user requests to terminate the application the information related to when and/or where the application is terminated is also stored to the storage unit 210.

In another embodiment, the predetermined event is exemplified as an event that an application is in use. Different from the above embodiment where the predetermined event is exemplified as an event that an application is activated and/or terminated, the present embodiment periodically stores time and/or location information of an application to the storage unit 210 when the application is in use or is continuously executed. For example, time and/or location information can be periodically stored to the storage unit 210 every 5 seconds. Besides, in another embodiment, the predetermined event is exemplified as an event that an application is switched from being executed in background to being executed in foreground. The portable electronic device 200 applicable to the event has a multi-tasking operating system. That is, the control unit 230 has a processor capable of controlling execution of several applications. Under control of such processor, the application, when first activated, will be executed in the foreground. If the application is not finished after its execution in the foreground, the application is moved to background. For example, when the user requests the activation of a music playing program for the first time but has not yet terminated the music playing program, the music playing program will be shifted to background execution. Then, if the user would like to request the activation of the music playing program again and operate the device to switch the music playing program from background to foreground, such event is regarded as an event of switching an application from background execution to foreground execution. In this case, at least one of the time information and the location information is stored to the storage unit 210.

The application usage history APP-UH stored in the storage unit 210 is recorded during a predetermined period. For example, the application usage history APP-UH can be recorded for a period such as last three months. Thus, along with the user's operation, the content of the application usage history APP-UH is continuously updated for the portable electronic device 200 to analyze the stored data and predict the user's behavior so that the prediction is closer to the user's recent habit in using the applications. However, the predetermined event is for illustration and explanation, and the disclosure is not limited thereto. Where there is an event from which a user's behavior in using the applications can be properly predicted, such an event can be regarded as a predetermined event of the disclosure.

The control unit 230 is used for selecting from the applications an application that is most possible to be requested for execution according to the application usage history APP-UH, and at least one of the current time Tc and the current location Lc. In an embodiment, the control unit 230 is used for generating execution probabilities for the applications according to the application usage history APP-UH and at least one of the current time Tc and the current location Lc. Then, the control unit 230 selects from the applications an application that has a highest execution probability and serves the selected application as the applications that is most possible to be requested for execution.

For further illustration, there is provided an implementation of selecting from the applications an application that has a highest execution probability. In this case, in view of the current time Tc, it can be identified from the application usage history APP-UH that certain application is activated most often at the current time. As such, the identified application is determined as the application that has a highest execution possibility at the current time. For example, suppose a user used to activate a browser application to read news at a particular website daily at 9.00 am. In this case, after the storage unit 210 records the application usage history APP-UH during the predetermined period, the application usage history APP-UH will keep several records of executing the browser at 9.00 am. Based on the application usage history APP-UH, the control unit 230 can identify that the user is very likely to activate the browser at 9.00 am and may even connect to a particular news website. In other words, at the current time of 9.00 am, the control unit 230 regards the browser as the application that has a highest probability of being used, and treats it as the application that is most possible to be requested for execution. For another example, suppose the user goes to certain place such as a school or a tutorial school to pick up children everyday, and activates a telephony application to make a phone call for a particular telephone number. In this case, after the storage unit 210 records the application usage history APP-UH during the predetermined period, the application usage history APP-UH will keep several records of activating the telephony application around the location of the school or the tutorial school. Based on the application usage history APP-UH, the control unit 230 can identify that the user is very likely to activate the telephony application around the location of the school or the tutorial school or even make a phone call for a particular telephone number. In other words, when the user is near to or arrives at the school or the tutorial school, the control unit 230 will regard the telephony application as the application that has a highest probability of being used and treat it as the application that is most possible to be requested for execution.

The above method using execution probabilities of applications and is disclosed for illustrating an embodiment. In other embodiments, the control unit 230 can analyze the application usage history APP-UH according to other data analysis methods, such as methods based on linear/non-linear classification algorithms or neural network, to construct the user's behavior and obtain the application that is most likely used by the user at the current time Tc or the current location Lc.

The control unit 230 is further used for controlling the portable electronic device 200 to display a shortcut icon Ic used to activate the selected application on a lock screen Fls. Referring to FIG. 3, a schematic diagram of an example of the portable electronic device 200 of FIG. 2 and a lock screen displayed thereby is shown. The control unit 230 controls for example the touch screen 240 to display a lock screen Fls. The lock screen Fls indicates that the portable electronic device 200 has entered a lock state and is thus unavailable for use.

The control unit 230 is further used for activating the selected application that is most possible to be requested for execution when the portable electronic device 200 is unlocked from the lock screen Fls via the shortcut icon Ic. In an embodiment of activating an application, when the touch screen 240 receives a predetermined slide operation or a predetermined click operation, the portable electronic device 200 will be unlocked and activate the corresponding application of the shortcut icon Ic. For example, the control unit 230 can control the touch screen 240 to display a bar-shaped icon besides the shortcut icon lc. Meanwhile, as to the predetermined slide operation or click operation, the user may click the shortcut icon lc and slide towards the direction indicated by the bar-shaped icon to complete the unlocking procedure and activating the corresponding application. In a practice, the above predetermined slide operation refers to pressing the shortcut icon Ic and moving towards a particular direction.

In another embodiment of activating an application, when the touch screen 240 receives the above predetermined slide operation or click operation, the portable electronic device 200 is firstly unlocked from the lock screen Fls and then provides a security verification procedure. Thus, in the present embodiment, only when security verification procedure is passed will the control unit 230 open the selected application. Examples of the information enabling the portable electronic device 200 to pass the security verification procedure include: a code information inputted via a keyboard or a touch screen 240, such as a string composed of English letters, numbers, or symbols; or a pattern information, also referred as the gesture input information, inputted by touching the touch screen 240 along a sliding path, such as the information inputted when the user draws a Z on the touch screen 240. However, the disclosure is not limited to the above exemplifications.

In an alternative embodiment of activating an application, the portable electronic device 200 directly provides the abovementioned security verification procedure. When the security verification procedure is passed, the portable electronic device 200 is unlocked and at the same time activates the corresponding application of the shortcut icon Ic.

The above embodiments illustrate how to unlock a portable electronic device and activate an application. The lock screen Fls is for avoiding the portable electronic device 200 generating unexpected results when being touched by mistake. The lock screen Fls can also be designed to possess security enhancement function. In practice, the lock screen Fls, also referred as "idle screen", has palm rejection function, but the disclosure is not limited thereto. In short, according to the present embodiment, a shortcut icon making the user conveniently activate an application is displayed on the lock screen, so that the convenience of use of the portable electronic device is increased, and the operation of the portable electronic device is made simpler and more efficient.

The present embodiment constructs the user's behavior and generates corresponding shortcut icon so as to achieve higher user convenience. In other words, the storage unit 210 can collect the application usage history APP-UH related to the user's behavior when the user gets used to activate a particular application at a certain time or a certain location, such as to activate an Internet application during the commuting time, to activate a telephony application when picking up children daily at fixed time or at a fixed location, or to activate a telephony application when feeling like making a phone call home weekly or daily at a fixed time. Thus, the portable electronic device 200 can predict what the user would like to do next or which application is most likely used. Then, the portable electronic device 200 displays the shortcut icon of the predicted application (such as an Internet application or a telecommunication program) and related instructions or parameters (such as the website or the telephone number) so that the user can conveniently open the desired application.

Besides, a computer program product is further provided in an embodiment. After a computing device executes a computer program, the computing device completes the abovementioned control method of the portable electronic device.

According to embodiments of the portable electronic device, the control method and the computer program product, execution information related to the applications is collected and stored to form an application usage history for constructing the user's behavior so as to identify an application that is most possible to be requested for execution. Thus, with the shortcut icon of application being provided at suitable time or location, the user can conveniently activate the identified application. In comparison to the conventional method in which the user has to open hierarchies of menus to locate his/her desired application, the shortcut icon provided in the present embodiment enables the user to conveniently and promptly activate his/her application. Thus, the convenience for using portable electronic device is enhanced, and the operation of the portable electronic device is made simpler and more efficient.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A control method for providing a shortcut on a lock screen of a portable electronic device, comprising:
storing (S110) an application usage history indicative of execution histories of a plurality of applications installed on the portable electronic device;
obtaining (S120) at least one of a current time and a current location of the portable electronic device;
selecting,(S130) from the applications, an application that is most possible to be requested for execution according to the application usage history and the at least one of the current time and the current location;
displaying (S140) a shortcut icon used to activate the selected application on the lock screen of the portable electronic device; and
activating (S150) the selected application when the portable electronic device is unlocked from the lock screen via the shortcut icon.

2. The control method according to claim 1, wherein, the step of selecting, from the applications, the application that is most possible to be requested for execution according to the application usage history and the at least one of the current time and the current location comprises:
generating execution probabilities for the applications according to the application usage history and the at least one of the current time and the current location; and
selecting, from the applications, the application that has a highest execution probability as the application that is most possible to be requested for execution.

3. The control method according to claim 1 or 2, wherein the application usage history is recorded during a predetermined period.

4. The control method according to one or more of the claims 1 to 3, wherein the application usage history comprises at least one of time information and location information of at least one predetermined event related to the applications.

5. The control method according to claim 4, wherein the predetermined events comprise an event that an application is activated.

6. The control method according to claim 4 or 5, wherein the at least one predetermined event comprises an event that an application is activated and another event that the application is terminated.

7. The control method according to one or more of the claims 4 to 6, wherein the at least one predetermined event comprises an event that an application is in use.

8. The control method according to one or more of the claims 4 to 7, wherein the at least one predetermined event comprises an event where an application is switched from being executed in background to being executed in foreground.

9. The control method according to one or more of the claims 1 to 8, wherein, the step of activating the selected application when the portable electronic device is unlocked from the lock screen via the shortcut icon comprises:
performing, at the portable electronic device, a security verification procedure;
activating, when the security verification procedure at the portable electronic device is passed, the selected application.

10. A portable electronic device, comprising:
a storage unit (210) used for storing an application usage history indicative of execution histories of a plurality of applications installed on the portable electronic device;
a detection unit used for obtaining at least one of a current time and a current location of the portable electronic device; and
a control unit (230) for selecting from the applications an application that is most possible to be requested for execution according to the application usage history and the at least one of the current time and the current location, wherein the control unit is further used for controlling the portable electronic device to display a shortcut icon used to activate the selected application on a lock screen and further used for activating the selected application when the portable electronic device is unlocked from the lock screen via the shortcut icon.

11. The portable electronic device according to claim 10, wherein the control unit generates execution probabilities for the applications according to the application usage history and the at least one of the current time and the current location, and selects from the applications the application that has a highest execution probability as the application that is most possible to be requested for execution.

12. The portable electronic device according to claim 10 or 11, wherein the application usage history is recorded during a predetermined period.

13. The portable electronic device according to one or more of the claims 10 to 12, wherein the application usage history comprises at least one of time information and location information of at least one predetermined event related to the applications.

14. The portable electronic device according to claim 13, wherein the at least one predetermined event of an event of application being activated, an event of application being terminated, an event of application being in use, an event of application being switched from being executed in background to being executed in foreground.

15. The portable electronic device according to one or more of the claims 10 to 14, wherein when the portable electronic device is unlocked from the lock screen via shortcut icon, the portable electronic device performs a security verification procedure, and activates the selected application when the security verification of the portable electronic device is passed.

16. A computer program product comprising at least one program instruction for performing a control method for providing a shortcut on a lock screen of a portable electronic device according to any one of claims 1 to 9.
